# EUROPÄISCHE PATENTSCHRIFT

(11) **EP 1 462 396 B1**
(45) Veröffentlichungstag und Bekanntmachung des Hinweises auf die Patenterteilung: **24.05.2006**
(21) Anmeldenummer: 04005752.3
(22) Anmeldetag: 11.03.2004
(51) Int. Cl.: B65G 47/51

(54) **Zwischenspeicher**
Intermediate buffer
Tampon intermédiaire

(30) Priorität: 25.03.2003 DE 20304880 U; 03.11.2003 DE 20316979 U; 21.01.2004 DE 202004000837 U
(43) Veröffentlichungstag der Anmeldung: 29.09.2004
(73) Patentinhaber: Harro Höfliger Verpackungsmaschinen GmbH, 71573 Allmersbach im Tal (DE)
(72) Erfinder: Reiser, Manfred, 71364 Winnenden (DE); Kincses, Armin, 73663 Berglen-Oppelsbohm (DE); Grotehusmann, Rolf, 74535 Bubenorbis (DE)
(74) Vertreter: Müller, Hans

(56) Entgegenhaltungen:
- DE-A- 10 122 032
- DE-A- 19 961 650
- US-A- 5 636 722

## Beschreibung

### TECHNISCHES GEBIET

Die Erfindung betrifft einen Zwischenspeicher für Tablettenblister, Kunststoffetuis, Schachteln und dergleichen Produkte. Ein solcher Zwischenspeicher ist produktionsmäßig zwischen zwei Produktionseinrichtungen zwischengeschaltet. Er stellt eine Art Puffer dar, in den bei Störungen in der nachgeschalteten Produktionseinrichtung von der ersten Produktionseinrichtung ankommende Produkte zwischengespeichert und aus dem umgekehrt, bei Störungen in der vorgeschalteten Produktionseinrichtung, Produkte wieder ausgelagert werden können.

### STAND DER TECHNIK

Aus dem deutschen Gebrauchsmuster G 94 08 634 ist ein Zwischenspeicher für Schokoladenriegel und dergleichen Lebensmittelteilchen bekannt. Diese Produkte werden zwangsweise immer durch den Speicher hindurchgeführt, auch wenn keine Störungen in den vorgelagerten oder nachgelagerten Produktionseinrichtungen vorhanden sind. Die einzelnen Produkte liegen während ihres Transportes durch den Speicher auf einzelnen Warentabletts, die zu mehreren in sogenannten Gondeln gemeinsam durch den Speicher hindurchtransportiert werden. Mit einem solchen Gondelspeicher können unterschiedliche Produktionsgeschwindigkeiten der vor- bzw. nachgelagerten Produktionseinrichtungen ausgeglichen werden. Um dies zu ermöglichen, sind sowohl im Speichereingang als auch im Speicherausgang getrennt voneinander arbeitende motorische Antriebe für das im Speicher endlos umlaufende Förderband vorhanden. Im Speicher ist ein Schlitten angeordnet, der vom Förderband umschlingend gehalten ist. Durch Verstellen dieses Schlittens kann das Förderband in seinem einen Bereich, der mit den Produkten bestückt wird, größer oder kleiner zur Verfügung gestellt werden. Sofern mehr Produkte in den Speicher pro Zeiteinheit eingeleitet werden, als pro Zeiteinheit dem Speicher wieder entnommen werden, wird der Schlitten so verstellt, dass der für die Produkte zur Verfügung stehende Speicherinhalt größer wird. Bei gleich großer Beschickungs- wie Entnahmeleistung bleibt der Schlitten praktisch in Ruhe. Ein solcher Speicher ist fortwährend in Betrieb, da die Produkte immer durch ihn hindurchlaufen müssen. Dadurch können die Antriebseinrichtungen für das im Speicher endlos umlaufende Förderband auch bei störungsfreiem Betrieb der vor- und nachgeschalteten Produktionseinrichtungen nicht abgeschaltet werden. Der Energiebedarf des Speichers ist dadurch vergleichsweise hoch.

### DARSTELLUNG DER ERFINDUNG

Ausgehend von diesem Stand der Technik liegt der Erfindung die Aufgabe zugrunde, einen wirtschaftlich günstigen Zwischenspeicher der eingangs genannten Art anzugeben.

Diese Erfindung ist durch die Merkmale des Hauptanspruches gegeben. Sinnvolle Weiterbildungen der Erfindung sind Gegenstand von sich an diesen Anspruch anschließenden weiteren Ansprüchen.

Der erfindungsgemäße Zwischenspeicher hat den Vorteil, dass seine zwischenlagereinrichtung, in die hinein bei einer Störung Produkte eingelagert und aus der solche Produkte bei Bedarf wieder ausgelagert werden können, bei störungsfreiem Betrieb der vor- und nachgeschalteten Produktionseinrichtungen nicht benötigt werden. Benötigt wird lediglich die zwischen den vor- und nachgeschalteten Produktionseinrichtungen als Überbrückungs-Transporteinrichtung vorgesehene Fördervorrichtung.

Damit ist bei störungsfreiem Betrieb, der der Regelfall ist, eine betriebswirtschaftlich günstige Einrichtung gegeben, um sofort, bei einer Störung, Produkte zwischenspeichern bzw. in einem solchen Zwischenspeicher eingelagerte Produkte auslagern zu können und damit eine nach- oder vorgelagerte Störung in ihrer Wirkung auf den weiteren Produktionsablauf auf einfache Weise wirkungslos machen zu können.

Die beiden Produktionseinrichtungen, die dem Zwischenspeicher vor- bzw. nachgeschaltet sind, können in aller Regel Transportmittel wie beispielsweise endlos umlaufende Förderbänder aufweisen.

Zwischen diesen beiden vor- bzw. nachgeschalteten Transportmitteln kann als Überbrückungs-Transportmittel eine Fördervorrichtung in Form eines sogenannten Vakuumbandes angeordnet werden. Mit einem solchen Vakuumband können die Produkte angesaugt von dem einen Fördermittel zum anderen Fördermittel transportiert werden.

Entsprechend den auch in der Zeichnung dargestellten Ausführungsbeispielen kann das Vakuumband zwei endlos umlaufende Transportbänder mit einem gegenseitigen konstanten Abstand besitzen. Eine Saugvorrichtung kann im Bereich zwischen den beiden Transportbändern wirksam sein, damit von ihr das jeweils zu transportierende Produkt an den beiden Bändern angesaugt werden und angesaugt gehalten werden kann.

Sofern ein Produkt zwischengespeichert werden soll, kann eine Abwurfvorrichtung in Transportrichtung beispielsweise quer neben den beiden Transportbändern vorhanden sein. Durch diese Abwurfvorrichtung kann ein angesaugt an den beiden Bändern gehaltenes Produkt soweit von den Transportbändern nach unten wegbewegt werden, dass die Saugkraft unterbrochen wird und das Produkt nach unten von den Transportbändern wegfallen und in die Zwischenlagereinrichtung hineinfallen kann. Das Abwerfen durch die Abwurfvorrichtung kann damit bei in Transportrichtung nicht vorhandener Transportgeschwindigkeit, das heißt, mit Transportgeschwindigkeit NULL des betreffenden Produktes erfolgen.

Das Anhalten des Produktes kann mittels einer der Abwurfvorrichtung vorgeschalteten Anhaltevorrichtung erfolgen. Diese Anhaltevorrichtung kann in Form von neben den Transportbändern angeordneter und aus der Ebene der Transportbänder herausbewegbarer Stifte verwirklicht werden. Ein an den Transportbändern angesaugt gehaltenes Produkt, das gegen solche Stifte stößt, wird in seiner Transportbewegung angehalten und anschließend von der Abwurfvorrichtung, die in Form von beispielsweise Leisten, die aus der Ebene der Transportbänder nach unten herausbewegbar sind, von den Transportbändern zumindest teilweise so weit wegbewegt, dass die das Produkt an den Förderbändern saugend haltende Haltekraft zu klein wird, um das Produkt an den Förderbändern weiterhin zu halten. Infolgedessen wird das Produkt nach unten von den Förderbändern abfallen.

In die unter den Förderbändern positionierte eine oder mehrere in Förderrichtung hintereinander angeordnete zwischenlagereinrichtungen können wahlweise Produkte eingelagert werden.

Die Zwischenlagereinrichtungen können einerseits für stapelbare und andererseits für nicht stapelbare Produkte jeweils unterschiedlich ausgebildet sein.

Für stapelbare Produkte, wie insbesondere stapelbare Tablettenblister kann jede Zwischenlagereinrichtung eine Magazineinrichtung mit einer Reihe von Magazinen besitzen, von denen jedes einzelne Magazin unter der als insbesondere Vakuumband ausgebildeten Fördervorrichtung positioniert werden kann. In jedes dieser Magazine kann eine bestimmte Anzahl von Produkten übereinander gestapelt als Produktstapel vorhanden sein. Nähere Einzelheiten zu der Bauweise solcher Magazineinrichtungen und zu der Ansteuerung zum Ein- und Auslagern von Produkten in die Magazine ist den Zeichnungen und der diesbezüglichen Figurenbeschreibung zu entnehmen.

Mit beispielsweise zwei Magazineinrichtungen, so wie sie in der Zeichnung dargestellt sind, können Produkte wahlweise in einer der beiden Magazineinrichtungen und dort in das jeweils bereitstehende Magazin eingelagert werden. Andererseits ist es möglich, aus den Magazineinrichtungen bzw. aus dem jeweils bereitstehenden Magazin den dort vorhandenen Produktstapel auch wieder auszulagern, d. h. das jeweils oberste Produkt eines solchen Produktstapels nacheinander wieder den Transportbändern und damit der Saugvorrichtung zuzuführen und damit den Abtransport der Produkte durch die Fördervorrichtung wieder zu ermöglichen.

Darüber hinaus ist es möglich, mit der in Förderrichtung beispielsweise ersten Magazineinrichtung Produkte zwischenzuspeichern und gleichzeitig aus der in Transportrichtung nachgeschalteten zweiten Magazineinrichtung eine vergleichbare Anzahl von Produkten auszulagern. Die Stapelvorrichtung wird damit benutzt, obwohl keine Störung in den vor- oder nachgeschalteten Produktionseinrichtungen vorhanden ist. Solches kann sinnvoll sein, um Produkte, wie beispielsweise Blister auf ihren einwandfreien Zustand zu überprüfen. Diese dem Produktionsprozess entnommenen Produkte können dem Zwischenspeicher entnommen werden, ohne dass die überprüften Produkte den Produktstrom an weiter zu verarbeitenden Produkten unterbrechen würden; eine Störung im Betriebsablauf im Zusammenhang mit der Herstellung und beispielsweise der Verpackung der Produkte, hervorgerufen durch zu überprüfende Produkte, würde nicht eintreten. Bei der Überprüfung als Gut-Produkte festgestellte Produkte können wieder der weiteren Produktion zugeführt werden, indem sie beispielsweise in nicht vollständig gefüllte und sich momentan nicht unterhalb der Fördervorrichtung befindliche Magazine eingelagert werden.

Für nicht oder nur schwer übereinander stapelbare Produkte, die ebenfalls Tablettenblister sein können, kann jede Zwischenlagereinrichtung ebenfalls eine Magazineinrichtung mit einer Reihe von Magazinen besitzen. Allerdings ist gemäß einem in der

Zeichnung dargestellten, entsprechenden Ausführungsbeispiel eine Übergabeeinrichtung funktionsmäßig zwischen der als Vakuumband ausgebildeten Fördervorrichtung und dem jeweils zu befüllenden oder zu entleerenden Magazin angeordnet.

Nähere Einzelheiten zu einer solchen Zwischenlagereinrichtung und zu der Ansteuerung zum Ein- und Auslagern von Produkten in ihre Magazine ist den Zeichnungen und der diesbezüglichen Figurenbeschreibung zu entnehmen. Auch mit einer solchen Zwischenlagereinrichtung können Produkte wahlweise in jedes ihrer Magazine eingelagert oder auch wieder ausgelagert werden. Das jeweils oberste Produkt einer solchen Produktgruppe kann dann nacheinander wieder den Transportbändern und damit der Saugvorrichtung zugeführt und durch die Fördervorrichtung weiter abtransportiert werden.

Weitere vorteilhafte Ausgestaltungen und Weiterbildungen der Erfindung sind den Merkmalen der Ansprüche sowie den nachstehenden Ausführungsbeispielen zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutern. Es zeigen:
- Fig. 1: eine schematisierte, teilweise geschnittene Seitenansicht des Zwischenspeichers nach der Erfindung,

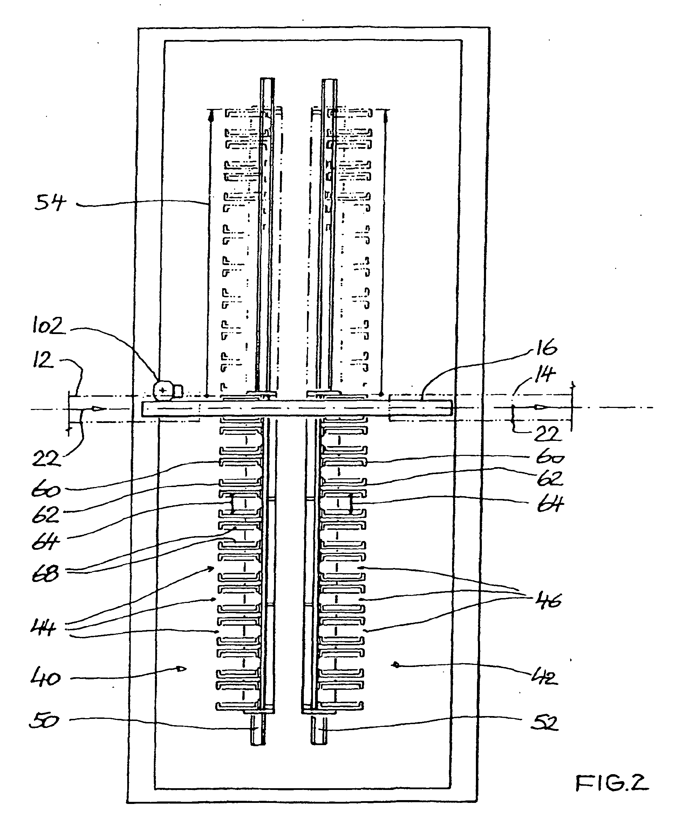

- Fig. 2: eine teilweise geschnittene schematisierte Draufsicht auf den Zwischenspeicher nach Fig. 1,
- Fig. 3: eine perspektivische Teilansicht des erfindungsgemäßen Zwischenspeichers,

- Fig. 4: eine schematisierte, teilweise geschnittene Seitenansicht des weiteren Zwischenspeichers nach der Erfindung,
- Fig. 5: eine teilweise geschnittene schematisierte Draufsicht auf den Zwischenspeicher nach Fig. 4,
- Fig. 6: eine perspektivische Teilansicht dieses weiteren Zwischenspeichers,
- Fig. 7: eine Teil-Draufsicht auf den weiteren Zwischenspeicher,
- Fig. 8: eine Teil-Stirnansicht auf den weiteren Zwischenspeicher.

### WEGE ZUM AUSFÜHREN DER ERFINDUNG

Ein Zwischenspeicher 10 ist zwischen dem Auslaufband 12 einer Blisterherstellmaschine und dem Zuführband 14 einer Weiterverarbeitungsmaschine wie beispielsweise einer sogenannten Walletmaschine oder Kartoniermaschine angeordnet.

Der Zwischenspeicher 10 besitzt ein sogenanntes Vakuumband 16, das mit seinem -linken- Einlaufbereich 18 über dem Auslaufband 12 und mit seinem -rechten- Auslaufbereich 20 über dem Zuführband 14 positioniert ist. Von dem Auslaufband 12 in Transportrichtung 22 dem Vakuumband 16 zugeführte Produkte, die im vorliegenden Beispielsfall Tablettenblister 24 sind, die bei diesem Ausführungsbeispiel aufeinander liegend stapelbar sind, werden im Einlaufbereich 18 von dem Vakuumband 16 angesaugt und im Auslaufbereich 20 infolge der dort, nicht mehr vorhandenen Saugkraft auf das Zuführband 14 überführt und von dort in Transportrichtung 22 beispielsweise einer nicht dargestellten Walletmaschine oder der Kartoniermaschine oder einer sonstigen weiteren Produktionseinrichtung zugeführt.

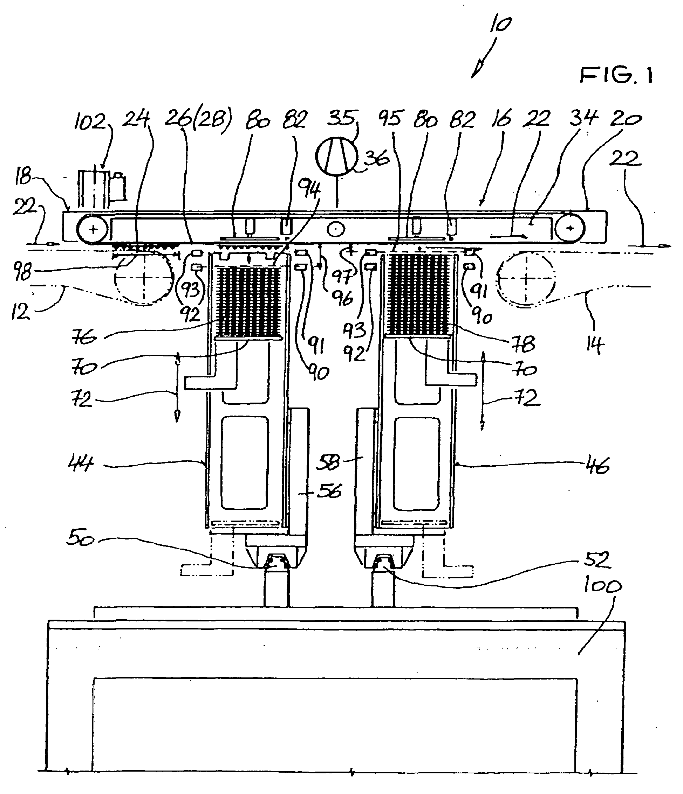

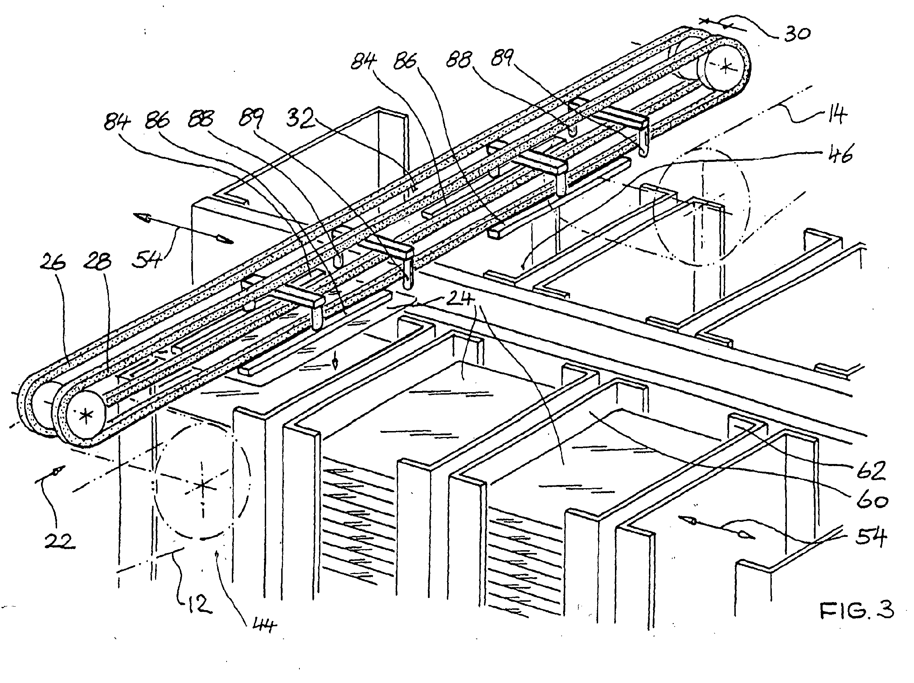

Das Vakuumband 16 besitzt ein linkes und rechtes jeweils endlos umlaufendes Transportband 26, 28. Diese beiden Transportbänder haben einen gegenseitigen Abstand 30 (Fig. 3). In diesem Abstand 30 ist dadurch ein Saugspalt 32 ausgebildet. Dieser Saugspalt 32 stellt die untere Öffnung einer im Vakuumband 16 ausgebildeten Unterdruckkammer 34 dar, in der über mit einer Unterdruckquelle 35 verbundene Sauganschlüsse, von denen in Fig. 1 ein Sauganschluss 36 dargestellt ist, ein Unterdruck hergestellt werden kann. Infolge eines solchen Unterdruckes können über das Auslaufband 12 zugeführte Tablettenblister 24 von den beiden Transportbändern 26, 28 angesaugt und an das Auslaufband 12 übergeben werden.

Im Auslaufbereich 20 verliert ein solcher an den Transportbändern 26, 28 angesaugter Blister 24 seinen Kontakt mit den in das Innere der Kammer 34 umgelenkten Transportbändern 26, 28 und kommt auf dem oberen Trum des Zuführbandes 14 zu liegen, so dass er von dem Zuführband 14 in Transportrichtung 22 weitertransportiert werden kann.

Durch ein solches Vakuumband 16 können bei störungsfreiem Betrieb der vor- bzw. nachgeschalteten Produktionseinrichtungen die Tablettenblister 24 vom Auslaufband 12 zum Zuführband 14 kontinuierlich transportiert werden.

Unterhalb des Vakuumbandes 16 ist eine linke und rechte Magazineinrichtung 40, 42 vorhanden. Jede der beiden Magazineinrichtungen 40, 42 besitzt mehrere, in Reihe hintereinander liegende einzelne Magazine 44 bzw. 46. Die Magazine 44 der linken Magazineinrichtung 40 sind auf einer linken Verfahrschiene 50 und die Magazine 46 der rechten Magazineinrichtung 42 auf einer rechten Verfahrschiene 52 gemeinsam verfahrbar. Die Magazine könnten allerdings auch einzeln verfahren werden. Die beiden Verfahrschienen 50, 52 sind im vorliegenden Fall in Querrichtung 54, die rechtwinklig zur Transportrichtung 22 vorhanden ist, unterhalb des Vakuumbandes 16 ausgerichtet.

Auf jeder der beiden Schienen 50, 52 ist eine der Anzahl der Magazine 44 bzw. 46 entsprechende Anzahl von Schlitten 56 bzw. 58 vorhanden. Auf jedem Schlitten 56, 58 ist ein Magazin 44 bzw. 46 fest angebracht.

Jedes Magazin 44, 46 besitzt zwei Seitenwände 60, 62, die in Querrichtung 54 einen derartigen lichten Abstand 64 aufweisen, dass ein zwischen ihnen eingelagerter Tablettenblister 24 von ihnen mit Spiel seitlich eingerahmt werden kann.

Jede Seitenwand 60, 62 ist im Querschnitt U-förmig geformt und besitzt eine untere Umkantung 68. Die Seitenwände 60, 62 könnten auch jeweils L-förmig geformt sein. Auf den beiden Umkantungen 68 werden die zwischen den Seitenwänden 60, 62 befindlichen, in dem entsprechenden Magazin 44 bzw. 46 eingelagerten Blister 24 unterstützend gehalten.

Zwischen den Seitenwänden 60, 62 und dabei zwischen ihren unteren Umkantungen 68 hindurch lässt sich ein Magazin-Teller 70 in Verstellrichtung 72, nach oben und unten, relativ zu den Seitenwänden 60, 62 verstellen. Mit Hilfe des Tellers 70 kann der zwischen den Seitenwänden 60, 62 vorhandene Stapel 76 von übereinander gestapelten Blistern 24 in Verstellrichtung 72 nach oben oder unten bewegt werden, und zwar innerhalb des Magazins 44 bzw. 46. Das Verstellen des Tellers 70 erfolgt in Abhängigkeit davon, ob ein Blister 24 in ein Magazin eingelagert werden soll oder ob der jeweils oberste Blister eines Stapels 78 gegen das Vakuumband 16 hochgehoben und von dem Vakuumband 16 wieder angesaugt und wegtransportiert werden soll, wie noch nachstehend näher beschrieben wird.

Das Einlagern von Blistern 24 erfolgt mittels einer Abwurfvorrichtung 80 und einer derselben in Transportrichtung vorgelagerten Anhaltevorrichtung 82.

Über einem unterhalb des Vakuumbandes 16 bereitgestellten. Magazin 44 der linken Magazineinrichtung.40 und oberhalb eines ebenfalls unterhalb des Vakuumbandes 16 bereitgestellten Magazins 46 der rechten Magazineinrichtung 42 ist jeweils eine solche Abwurfvorrichtung 80 und eine solche Anhaltevorrichtung 82 neben den beiden Transportbändern 26, 28 vorhanden.

Die Abwurfvorrichtung 80 besteht jeweils aus einer rechten und linken Abwurfleiste 84, 86, die in Transportrichtung 22 außen neben dem rechten Transportband 28 bzw. seitlich außen neben dem linken Transportband 26 vorhanden sind. In Transportrichtung vor diesen beiden Abwurfleisten 84, 86 sind zwei Anhaltestifte 88, 89 vorhanden, die aus der Ebene der Transportbänder 26, 28 nach unten ausgefahren werden können. Im ausgefahrenen Zustand stößt ein an den Transportbändern 26, 28 angesaugt anhängender Blister 24 mit seiner vorderen Stirnseite gegen diese Stifte 88, 89. Anschließend werden die Abwurfleisten 84, 86 aus der Ebene der Transportbänder nach unten herausbewegt und dadurch ein Blister 24 entweder vollständig oder teilweise von den Transportbändern 26, 28 abgedrückt. Dadurch kann die Saugkraft nicht mehr auf den Blister 24 haltend einwirken mit der Folge, dass derselbe in das unterhalb der Abwurfleisten und der Anhaltestifte 88, 89 bereitstehende Magazin 44 hineinfallen kann. Dies Hineinfallen kann durch die Schubkraft der Abwurfleisten unterstützt werden, so dass neben dem selbständigen Hineinfallen auch ein mehr oder weniger Hineinstoßen erfolgen kann.

Eine solche Abwurfvorrichtung und Anhaltevorrichtung 82 ist auch über dem Magazin 46 vorhanden.

Über seitlich neben dem zu befüllenden oder zu entleerenden Magazin 44, 46 positionierte Sensoreinrichtungen 90, 92 (Fig. 1) kann eine Lichtschranke 94 durch den Speicherraum des Magazins 44 bzw. 46 hindurch erzeugt werden. Beim Einstapeln wird diese Sensoreinrichtung 90, 92 aktiviert mit der Folge, dass bei Unterbrechen der Lichtschranke 94 durch einen von oben in das Magazin 44 einfallenden Blister 24 der Teller 70 dieses Magazins 44 schrittweise nach unten bewegt wird, bis die Lichtschranke 94 wieder frei, d. h. nicht mehr unterbrochen ist. Der Abstand 96 dieser Lichtschranke 94 und damit der Sensoreinrichtung 90, 92 von den unteren Transportbändern 26, 28 und damit vom Vakuumband 16 ist im vorliegenden Beispielsfall kleiner, als es der Länge 98 eines Blisters 24 in Transportrichtung 22 entspricht. Dadurch wird verhindert, dass ein von dem Vakuumband 16 in ein Magazin hineinfallender bzw. hineingestoßener Blister 24 kopfüber umgestürzt eingestapelt werden könnte.

Sofern das in Fig. 1 ersichtliche Magazin 44 vollständig gefüllt ist, wird dieses Magazin 44 der linken Magazineinrichtung 40 in Querrichtung 54 soweit transportiert, bis das dem Magazin 44 benachbarte Magazin 44 unter dem Vakuumband 16 positioniert ist. Während dieses Auswechselns der Magazine 44 der linken Magazineinrichtung 40 werden bei entsprechendem Bedarf die Magazine 46 der zweiten Magazineinrichtung 42 in vergleichbarer Weise gefüllt.

Zum Auslagern von Blistern 42 aus Magazinen 44 bzw. 46 wird das dazu jeweils vorgesehene Magazin - in Fig. 1 das entsprechende Magazin 46 - unter dem Vakuumband 16 positioniert und dazu entsprechend auf der Schiene 52 verfahren.

Anschließend wird der Teller 70 des Magazins 46 der Fig. 1 in Verstellrichtung 72 nach oben verfahren, so dass der jeweils oberste Blister 24 wieder von dem Vakuumband 16 angesaugt und dann auf das Zuführband 14 weiter transportiert werden kann. Das Ansteuern des Magazin-Tellers 70 des beispielsweise Magazins 46 erfolgt mittels einer zweiten Sensoreinrichtung 91, 93, die ebenfalls bei der linken Magazineinrichtung 40 vorhanden ist. Durch diese Sensoreinrichtung wird eine Lichtschranke 95 erzeugt. Der Abstand 97 dieser Lichtschranke 95 von den beiden Transportbändern 26, 28 ist derart, dass beim Unterschreiten dieses Abstandes der jeweils oberste Blister des betreffenden Blisterstapels 78 wieder von dem Vakuumband 16 angesaugt werden kann.

Die Magazineinrichtungen 40, 42 ruhen über den beiden Verfahrschienen 50, 52 auf einem kastenförmigen Unterbau 100 auf, in dem die erforderlichen Antriebs- und Steuerungsaggregate untergebracht sind. Das durch einen motorischen Antrieb 102 angetriebene Vakuumband 16 kann über eine Haltekonstruktion ebenfalls auf dem Unterbau 100 aufruhen

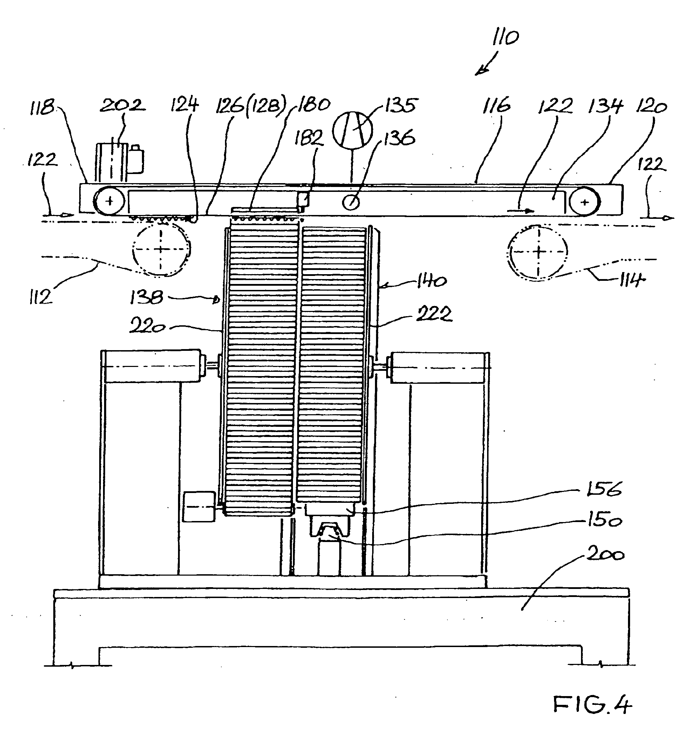

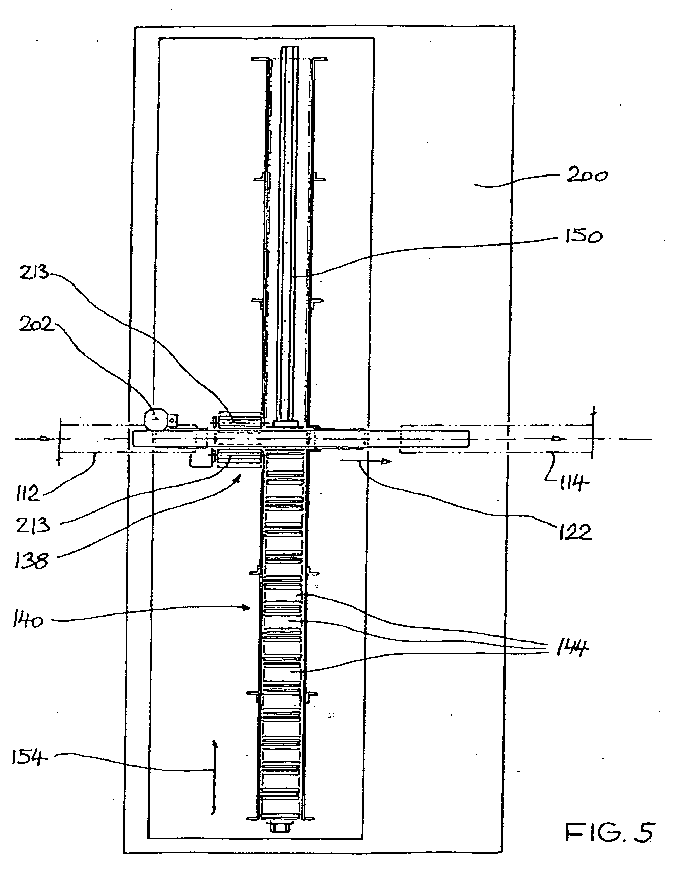

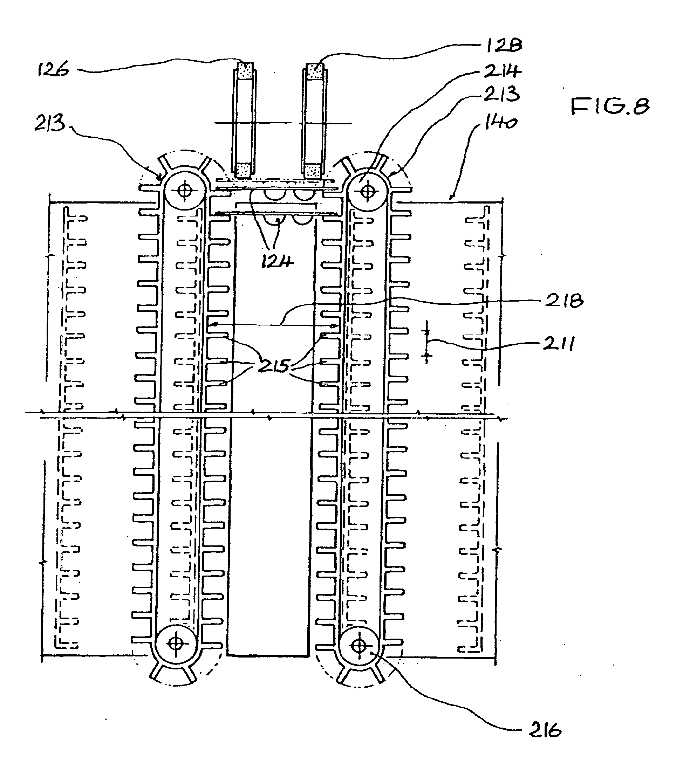

Bei dem Ausführungsbeispiel gemäß den Fig. 4 bis 8 ist ebenfalls zwischen dem Auslaufband 112 einer Blisterherstellmaschine und dem Zuführband 114 einer Weiterverarbeitungsmaschine wie beispielsweise einer sogenannten Walletmaschine oder Kartoniermaschine ein Zwischenspeicher 110 angeordnet.

Der Zwischenspeicher 110 besitzt ein Vakuumband 116, das dem Vakuumband 16 entspricht. Das Vakuumband 116 ist mit seinem - linken- Einlaufbereich 118 über dem Auslaufband 112 und mit seinem -rechten- Auslaufbereich 120 über dem Zuführband 114 positioniert. Von dem Auslaufband 112 in Transportrichtung 122 dem Vakuumband 116 zugeführte Produkte, die im vorliegenden Beispielsfall Tablettenblister 124 sind, werden im Einlaufbereich 118 von dem Vakuumband 116 angesaugt und im Auslaufbereich 120 durch die dort nicht mehr vorhandene Saugkraft auf das Zuführband 114 überführt und von dort in Transportrichtung 122 beispielsweise einer nicht dargestellten Walletmaschine oder der Kartoniermaschine oder einer sonstigen weiteren Produktionseinrichtung zugeführt.

Die Tablettenblister 124 besitzen eine derartige Gestalt, dass sie sich nicht übereinander liegend stapeln lassen.

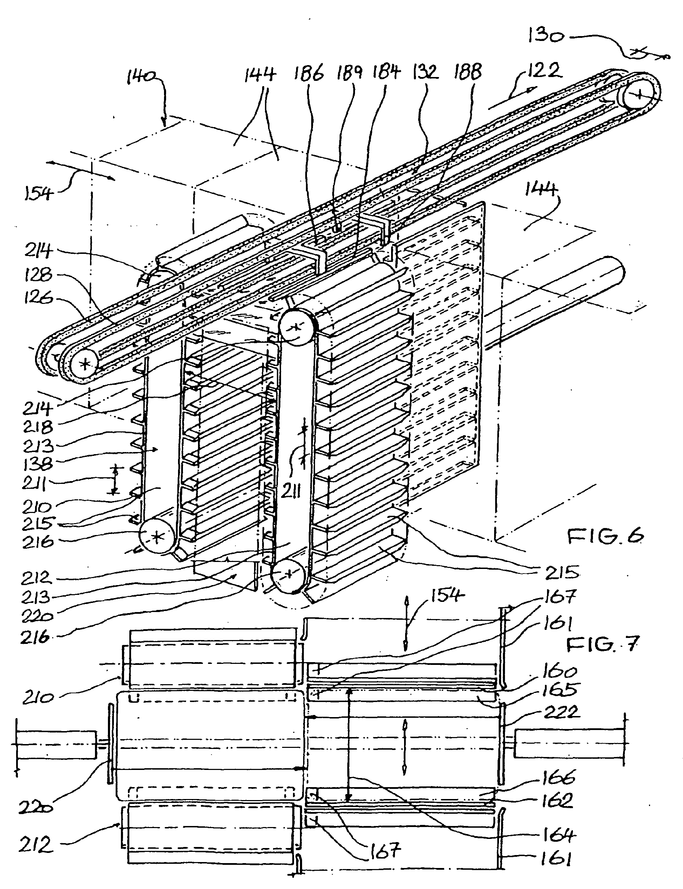

Das Vakuumband 116 besitzt ein linkes und rechtes jeweils endlos umlaufendes Transportband 126, 128. Diese beiden Transportbänder haben einen gegenseitigen Abstand 130 (Fig. 6). In diesem Abstand 130 ist dadurch ein Saugspalt 132 ausgebildet. Dieser Saugspalt 132 stellt die untere Öffnung einer im Vakuumband 116 ausgebildeten Unterdruckkammer 134 dar, in der über mit einer Unterdruckquelle 135 verbundene Sauganschlüsse, von denen in Fig. 1 ein Sauganschluss 136 dargestellt ist, ein Unterdruck hergestellt werden kann. Infolge eines solchen Unterdruckes können über das Auslaufband 112 zugeführte Tablettenblister 124 von den beiden Transportbändern 126, 128 angesaugt und an das Auslaufband 112 übergeben werden.

Im Auslaufbereich 120 verliert ein solcher an den Transportbändern 126, 128 angesaugter Blister 124 seinen Kontakt mit den in das Innere der Kammer 134 umgelenkten Transportbändern 126, 128 und kommt auf dem oberen Trum des Zuführbandes 114 zu liegen, so dass er von dem Zuführband 114 in Transportrichtung 122 weitertransportiert werden kann.

Durch ein solches Vakuumband 116 können bei störungsfreiem Betrieb der vor- bzw. nachgeschalteten Produktionseinrichtungen die Tablettenblister 124 vom Auslaufband 112 zum Zuführband 114 kontinuierlich transportiert werden.

Unterhalb des Vakuumbandes 116 sind im vorliegenden Beispielsfall zwei Übergabeeinrichtungen mit jeweils einer Magazineinrichtung vorhanden, von denen eine Übergabeeinrichtung 138 mit einer Magazineinrichtung 140 in der Zeichnung dargestellt sind. Die Magazineinrichtung 140 besitzt mehrere, in Reihe hintereinander liegende einzelne Magazine 144. Die Magazine 144 sind längs einer Verfahrschiene 150 - im vorliegenden Beispielsfall gemeinsam - verfahrbar. Die Verfahrschiene 150 ist im vorliegenden Fall in Querrichtung 154, die rechtwinklig zur Transportrichtung 122 vorhanden ist, unterhalb des Vakuumbandes 116 ausgerichtet.

Längs der Schiene 150 ist ein Schlitten 156 verfahrbar, auf dem die Magazine 144 fest angebracht sind.

Jedes Magazin 144 besitzt zwei Seitenwände 160, 162, die in Querrichtung 154 einen derartigen lichten Abstand 164 aufweisen, dass ein zwischen ihnen eingelagerter Tablettenblister 124 von ihnen mit Spiel seitlich eingerahmt werden kann. An den Seitenwänden 160, 162 sind jeweils Wandstummel 165, 166 fest angebracht. Auf jeweils einem Wandstummel 165 und einem Wandstummel 166 lagert jeweils ein Tablettenblister 124 auf. Die Wandstummel 165 haben untereinander einen solchen gegenseitigen Abstand, dass sich eingelagerte Blister 124 nicht berühren. Gleiches gilt für die Wandstummel 166. Die Wandstummel 165, 166 besitzen eine Anlaufschräge 167 zum erleichternden Einlagern von Blistern 124 aus der vorgelagerten Übergabeeinrichtung, wie noch nachstehend näher beschrieben wird.

Rückseitig können die Magazine 144 durch eine in Querrichtung 154 sich erstreckende Wand 161 verschlossen sein, die ortsfest vorhanden ist und nicht mit den Magazinen 144 verbunden ist. Eine solche Wand 161 ist nicht im Bereich der Übergabeeinrichtung 138 vorhanden, um das Auslagern von Blistern 124 aus einem bereitstehenden Magazin zu ermöglichen.

Die Übergabeeinrichtung 138 besitzt zwei endlos umlaufende Fördereinrichtungen 210, 212 mit jeweils zwei endlos umlaufenden, jeweils um eine obere Umlenkrolle 214 und eine untere Umlenkrolle 216 umlaufenden Förderbändern 213. Die beiden Umlenkrollen 214, 216 jeder Fördereinrichtung 210, 212 sind seitlich versetzt unterhalb der beiden Transportbänder 126, 128 angeordnet. An jedem Förderband 213 sind in gleichen Abständen 211 Kragböden 215 befestigt. Die beiden Förderbänder 213 haben einen derartigen gegenseitigen lichten Abstand 218, der in etwa dem lichten Abstand zwischen gegenüberliegenden Wandstummeln 165, 166 eines Magazins 144 entspricht, dass von den beiden Transportbändern 126, 128 nach unten auf jeweils bereitstehende, gegenüberliegende Kragböden 215 von oben auffallende Tablettenblister 124 in der Übergabeeinrichtung 138 eingelagert werden können, und dass die beim gegenläufigen, synchronen Umlaufen der beiden Förderbänder 213 mit ihren aufeinander zugerichteten Förderbandabschnitten nacheinander auf den Kragböden 215 aufliegenden, eingespeicherten Tablettenblister 124 nach unten bzw. beim Aufstapeln wieder in Richtung der Transportbänder 126, 128 gemeinsam nach oben transportiert werden können, so dass diese Tablettenblister 124 dann anschließend wieder an die Transportbänder 126, 128 angesaugt werden können.

Sobald eine Gruppe von Tablettenblister 124 in der Übergabeeinrichtung 138 eingespeichert ist, wobei die Anzahl der eingespeicherten Tablettenblister 124 nicht größer ist, als Tablettenblister von einem Magazin 144 aufgenommen werden können, wird diese Gruppe von Tablettenblistern 124 mittels eines in Transportrichtung 122 bewegbaren Schiebers 220 aus dem Bereich der Kragböden 215 der beiden Förderbänder 213 herausgeschoben und auf die Wandstummel 165, 166 eines in Transportrichtung 122 bereitstehenden Magazins 144 aufgeschoben. In umgekehrter Richtung kann eine in diesem Magazin 144 bereitstehende Gruppe von Blisterpackungen 124 mittels eines rückseitig an dem Magazin 144 vorhandenen Schiebers 222 wieder zurück auf die Kragböden 215 der beiden Förderbänder 213 geschoben werden. Mittels der beiden Schieber 220, 222 kann eine Gruppe von Tablettenblistern 124 aus der Übergabeeinrichtung 138 in ein jeweils bereitstehendes Magazin 144 hineingeschoben bzw. aus einem solchen Magazin wieder in die Übergabeeinrichtung 138 zurückgeschoben werden.

Es wäre möglich, zwei Magazineinrichtungen 140 parallel nebeneinander anzuordnen, so dass dann beispielsweise mittels des Schiebers 220 eine Gruppe von Tablettenblistern 124 nicht in ein Magazin 144 der in der Zeichnung dargestellten einzigen Magazineinrichtung 140, sondern beispielsweise - mit einem etwa doppelten Verschiebeweg - in ein Magazin einer parallel hinter der Magazineinrichtung 140 angeordneten weiteren Magazineinrichtung hineingeschoben werden kann. Eine solche zweite Magazineinrichtung könnte auch - bezogen auf die Fig. 6 und 7 - auf der linken Seite der Übergabeeinrichtung 138 angeordnet werden. Die Schieber müssten dann gegebenenfalls nicht nur in einer Richtung sondern auch in der dazu entgegengesetzten Richtung beweglich ausgebildet werden, um das Hin- und Herschieben nicht zu behindern.

Das Einlagern von Blistern 124 in eine Übergabeeinrichtung hinein erfolgt mittels einer Abwurfvorrichtung 180 und einer derselben in Transportrichtung vorgelagerten Anhaltevorrichtung 182. Die Abwurfvorrichtung 180 ist oberhalb der Übergabeeinrichtung 138 vorhanden.

Die Abwurfvorrichtung 180 besteht jeweils aus einer rechten und linken Abwurfleiste 184, 186, die in Transportrichtung 122 außen neben dem rechten Transportband 128 bzw. seitlich außen neben dem linken Transportband 126 vorhanden sind. In Transportrichtung vor diesen beiden Abwurf leisten 184, 186 sind zwei Anhaltestifte 188, 189 vorhanden, die aus der Ebene der Transportbänder 126, 128 nach unten ausgefahren werden können. Im ausgefahrenen Zustand stößt ein an den Transportbändern 126, 128 angesaugt anhängender Blister 124 mit seiner vorderen Stirnseite gegen diese Stifte 188, 189. Anschließend werden die Abwurfleisten 184, 186 aus der Ebene der Transportbänder nach unten herausbewegt und dadurch ein Blister 124 entweder vollständig oder teilweise von den Transportbändern 126, 128 abgedrückt. Dadurch kann die Saugkraft nicht mehr auf den Blister 124 haltend einwirken mit der Folge, dass derselbe nach unten auf bereitstehende zwei Kragböden 215 fallen kann. Dies Hineinfallen kann durch die Schubkraft der Abwurfleisten unterstützt werden, so dass neben dem selbständigen Fallen auch ein mehr oder weniger Stoßen erfolgen kann.

Durch zueinander entgegengesetztes Antreiben der beiden Förderbänder 213 kann jeweils ein oberer freier Platz zwischen den beiden Förderbändern 213 zum Einlagern eines nächsten Blisters 124 bereitgestellt werden.

Sobald die zwischen den beiden Förderbändern 213 zum Zwischenlagern von Blistern 124 vorhandene Gasse mit einer Gruppe von Blistern 124 voll belegt ist, wobei die Anzahl der Blister 124 einer Gruppe maximal der Aufnahmekapazität eines Magazins 144 entspricht, wird diese Gruppe von Blistern 124 mittels des Schiebers 220 in ein bereitstehendes Magazin 144 hineingeschoben. Der rückseitig des bereitstehenden Magazins 144 vorhandene Schieber 222 verhindert, dass bei dieser Schubbewegung die Blister 124 rückwärts aus dem Magazin 144 herausfallen können.

Nach dem Befüllen eines Magazins 144 werden alle Magazine 144 dieser Magazineinrichtung in Querrichtung 154 so weit verschoben, dass ein weiteres, leeres Magazin 144 zum Befüllen in Förderrichtung 122 fluchtend mit der Übergabeeinrichtung 138 bereitsteht. Nach dem Zurückfahren des Schiebers 220 in seine in Fig. 6 und 7 dargestellte Position können dann neue, weitere Blister 124 in die Übergabeeinrichtung 138 hinein zwischengespeichert werden.

Zum Auslagern der in den Magazinen 144 eingelagerten Blister 124 wird ein mit solchen Blistern gefülltes Magazin 144 so auf der Verfahrschiene 150 verfahren, dass das betreffende Magazin in Transportrichtung 122 fluchtend zur Übergabeeinrichtung 138 ausgerichtet ist. In dieser Position, die in Fig. 6 und 7 dargestellt ist, ist die die Magazine ansonsten rückwärtig begrenzende Wand 161 nicht mehr vorhanden, so dass mittels des Schiebers 222 diese Gruppe von Blistern 124 aus dem betreffenden Magazin 144 wieder in die Übergabeeinrichtung 138 und dort auf bereitstehende Kragböden 215 aufgeschoben werden kann. Durch gegenüber dem Einlagerungsvorgang nunmehr entgegengesetztes Antreiben der beiden Förderbänder 213 können dann die in der Übergabeeinrichtung 138 vorhandenen Blister 124 nacheinander wieder nach oben in Richtung zu den beiden Transportbänder 126, 128 des Vakuumbandes 116 hintransportiert werden, von demselben 116 angesaugt und in Transportrichtung 122 weitertransportiert werden.

Die Übergabeeinrichtung 138 und die Magazineinrichtung 140 ruhen mit der Verfahrschiene 150 auf einem kastenförmigen Unterbau 200 auf, in dem die erforderlichen Antriebs- und Steuerungsaggregate untergebracht sind. Das durch einen motorischen Antrieb 202 angetriebene Vakuumband 116 kann über eine Haltekonstruktion ebenfalls auf dem Unterbau 200 aufruhen.

Die Übergabeeinrichtung 138 mit der zumindest einen Magazineinrichtung 140 kann auch - bezogen auf die Darstellung der Fig. 6 - um 90 Grad gedreht unterhalb der beiden Transportbänder 126, 128 angeordnet werden.

## Patentansprüche

1. Zwischenspeicher (10, 110) für Tablettenblister (24, 124), Kunststoffetuis, Schachteln und dergleichen Produkte, der in Transportrichtung (22, 122) zwischen einer ersten und einer in Produktionsrichtung zweiten Produktionseinrichtung zwischenschaltbar ist,
- **dadurch gekennzeichnet, dass**
- eine endlos umlaufende Fördervorrichtung (16, 116) zwischen den beiden Produktionseinrichtungen vorhanden ist,
- ein Unterdruckerzeuger (35, 135) so an der Fördervorrichtung (16, 116) wirksam vorhanden ist, dass die Produkte (24, 124) an der Fördervorrichtung (16, 116) angesaugt haltbar sind,
- zumindest eine Zwischenlagereinrichtung (40, 42, 138, 140) für Produkte (24, 124) unterhalb der Fördervorrichtung (16, 116) vorhanden ist,
- - in der von der Fördervorrichtung (16, 116) abgefallene oder abgestoßene Produkte (24, 124) übereinander liegend einlagerbar sind und/oder
- - aus der jeweils eingelagerte Produkte (24, 124) wieder an die Fördervorrichtung (16, 116) ansaugbar übergebbar sind.

2. Zwischenspeicher nach Anspruch 1,
- **dadurch gekennzeichnet, dass**
- die beiden Produktionseinrichtungen jeweils ein Transportmittel (12, 14, 112, 114) für die Produkte (24, 124) enthalten,
- die Fördervorrichtung (16, 116) funktionsmäßig zwischen den beiden Transportmitteln (12, 14, 112, 114) vorhanden ist.

3. Zwischenspeicher nach einem der vorstehenden Ansprüche,
- **dadurch gekennzeichnet, dass**
- die Fördervorrichtung ein Vakuumband (16, 116) besitzt, an dem die Produkte (24, 124) ansaugbar haltbar sind.

4. Zwischenspeicher nach.einem der vorstehenden Ansprüche,
- **dadurch gekennzeichnet, dass**
- das Vakuumband (16, 116) zwei endlos umlaufende Transportbänder (26, 28, 126, 128) besitzt, die einen gegenseitigen seitlichen konstanten Abstand (30, 130) aufweisen,
- eine Abwurfvorrichtung (80, 180) in Transportrichtung (22, 122) quer neben den beiden Transportbändern (26, 28, 126, 128) vorhanden ist, durch die jeweils ein Produkt (24, 124) von den Transportbändern (26, 28, 126, 128) so nach unten wegbewegbar ist, dass die dieses Produkt (24, 124) an den Transportbändern (26, 28, 126, 128) saugend haltende Haltekraft unwirksam wird,
- eine Anhaltevorrichtung (82, 182) in Transportrichtung (22, 122) vor der Abwurfvorrichtung (80, 180) vorhanden ist, die aus der Ebene der Transportbänder (26, 28, 126, 128) so weit nach unten herausbewegbar ist, dass ein Weitertransport eines an den Transportbändern (26, 28, 126, 128) angesaugt hängenden Produktes (24, 124) unterbrechbar ist.

5. Zwischenspeicher nach Anspruch 4,
- **dadurch gekennzeichnet, dass**
- eine Saugvorrichtung (132) in Transportrichtung quer neben den beiden Transportbändern (26, 28, 126, 128) vorhanden ist.

6. Zwischenspeicher nach Anspruch 4,
- **dadurch gekennzeichnet, dass**
- die Anhaltevorrichtung (82, 182) aus- und einfahrbare Stifte (88, 89, 188, 189) besitzt.

7. Zwischenspeicher nach einem der vorstehenden Ansprüche,
- **dadurch gekennzeichnet, dass**
- mehrere in Transportrichtung (22, 122) hintereinander angeordnete Zwischenlagereinrichtungen (40, 42, 138, 140) vorhanden sind,
- in jede Zwischenlagereinrichtung unabhängig voneinander Produkte einlagerbar bzw. aus derselben wieder auslagerbar sind.

8. Zwischenspeicher nach einem der vorstehenden Ansprüche,
- **dadurch gekennzeichnet, dass**
- jede Zwischenlagereinrichtung (40, 42) Magazine (44, 46) enthält, die jeweils einzeln unter der Fördervorrichtung bzw. dem Vakuumband (16) so positionierbar sind, dass Produkte (24) von dem Vakuumband in ein Magazin (44, 46) übergebbar bzw. an das Vakuumband aus dem Magazin (44, 46) heraus übergebbar sind,
- die Produkte (24) aufeinander liegend in den Magazinen (44, 46) stapelbar sind.

9. Zwischenspeicher nach Anspruch 8,
- **dadurch gekennzeichnet, dass**
- eine Verstelleinrichtung zum höhenmäßigen Verstellen, relativ zum Magazin, der in einem Magazin eingelagerten Produkte, vorhanden ist,
- die höhenmäßige Verstelleinrichtung, für die Produkte (24) desjenigen Magazins (44, 46) vorhanden ist, an das Produkte (24) vom Vakuumband (16) empfangbar bzw. aus dem Produkte (24) an das Vakuumband (16) übergebbar sind,
- die höhenmäßige Verstellvorrichtung so vorhanden ist, dass ein lichter Abstand (96, 97) zwischen der Fördervorrichtung (16) und dem jeweils obersten Produkt (24) eines zu befüllenden bzw. zu entleerenden Magazins vorbestimmte Werte nicht über- oder unterschreitet.

10. Zwischenspeicher nach einem der Ansprüche 1 bis 7,
- **dadurch gekennzeichnet, dass**
- jede Zwischenlagereinrichtung eine Übergabeeinrichtung (138) und eine Magazineinrichtung (140) mit zumindest einem Magazin (144) enthält,
- die Übergabeeinrichtung (138) so zu der Fördervorrichtung bzw. so zu dem Vakuumband (116) und das zumindest eine Magazin so zu der Übergabeeinrichtung jeweils positioniert ist, dass Produkte von der Fördervorrichtung bzw. dem Vakuumband an die Übergabeeinrichtung und von dieser an ein Magazin jeweils übergebbar sind, und umgekehrt von einem Magazin an die Übergabeeinrichtung und von dieser wieder an die Fördervorrichtung übergebbar sind.

11. Zwischenspeicher nach Anspruch 10,
- **dadurch gekennzeichnet, dass**
- eine Übergabeeinrichtung (138) zwei um Umlenkrollen (214, 216) endlos umlaufende, wenigstens eine Geradstrecke aufweisende Förderbänder (213) besitzt, die in Transportrichtung (122) unterhalb der Fördervorrichtung (116) vorhanden sind,
- jedes Förderband (213) rechtwinklig abstehende Kragböden (215) aufweist,
- eine Antriebseinrichtung zur synchronen Umlaufbewegung der beiden Förderbänder (213) in beiden Umlaufrichtungen vorhanden ist,
- eine Schiebereinrichtung (220, 222) zwischen den beiden einander gegenüberliegenden Förderbändern (213) einer Übergabevorrichtung (138) so vorhanden ist, dass zwischen den aufeinander zugerichteten Geradstrecken dieser beiden Förderbänder (213) befindliche, auf ihren Kragböden (215) aufliegende Produkte, als Produktgruppe aus dem Bereich der Übergabeeinrichtung (138) in ein Magazin (144) und/oder umgekehrt wieder zurück in die Übergabeeinrichtung (138) schiebbar sind.

12. Zwischenspeicher nach Anspruch 11,
- **dadurch gekennzeichnet, dass**
- eine Schiebereinrichtung zwei Schieber (220, 222) besitzt, von denen durch den einen Schieber (220) Produkte aus einer Übergabeeinrichtung (138) in ein Magazin (144) hineinschiebbar sind, und von denen durch den anderen Schieber (222) Produkte aus einem Magazin (144) wieder zurück in die Übergabeeinrichtung (138) hineinschiebbar sind.

13. Zwischenspeicher nach einem der Ansprüche 10 bis 12,
**dadurch gekennzeichnet, dass**
- die Förderbänder (213) einer Übergabeeinrichtung (138) so ansteuerbar sind, dass die jeweils obersten beiden der sich in ihren Geradstrecken befindlichen, aufeinander zugerichteten Kragböden (215) einen jeweils vorgegebenen Abstand zu der Fördervorrichtung, wie insbesondere zu den Transportbändern (126, 128) aufweisen.

14. Zwischenspeicher nach einem der Ansprüche 10 bis 13, **dadurch gekennzeichnet, dass**
- Übergabeeinrichtung (138) und Magazineinrichtung (140) so ausgerichtet sind, dass die Schieberichtung, mit der Produkte aus einer Übergabeeinrichtung (138) in eine Magazineinrichtung (140) schiebbar sind, parallel oder quer zur Transportrichtung (122) ausgerichtet ist.

15. Zwischenspeicher nach einem der vorstehenden Ansprüche;
- **dadurch gekennzeichnet, dass**
- Magazine (44, 144) längs einer Verfahrschiene (50, 52, 150) einzeln oder gemeinsam verstellbar sind.

16. Zwischenspeicher nach Anspruch 15,
- **dadurch gekennzeichnet, dass**
- jedes Magazin (44, 46, 144) auf einem Verfahrschlitten (56, 58, 156) fest angebracht oder als Verfahrschlitten ausgebildet ist,
- der Verfahrschlitten (56, 58, 156) längs einer Verfahrschiene (50, 52, 150) verstellbar ist.

17. Zwischenspeicher nach einem der vorstehenden Ansprüche,
- **dadurch gekennzeichnet, dass**
- ein Magazin (144) übereinander angeordnete Auflager (165, 166) besitzt, die so vorhanden sind, dass auf jeweils zwei Auflager (165, 166), die aufeinander zugerichtet sind, ein Produkt an seinen zwei Randbereichen abstützbar einlagerbar ist.

## Claims

1. Intermediate store (10, 110) for tablet blisters (24, 124), plastic cases, boxes and similar products, it being possible for the intermediate store to be switched in the transporting direction (22, 122) between a first and a second production arrangement, as seen in the production direction,
- **characterized in that**
- an endlessly circulating conveying apparatus (16, 116) is provided between the two production arrangements,
- a negative-pressure generator (35, 135) is provided for action on the conveying apparatus (16, 116) such that the products (24, 124) can be retained with suction attachments on the conveying apparatus (16, 116),
- at least one intermediate storage arrangement (40, 42, 138, 140) for products (24, 124) is provided beneath the conveying apparatus (16, 116),
-- it being possible for products (24, 124) which have fallen down, or been ejected, from the conveying apparatus (16, 116) to be stored in the intermediate storage arrangement in a state in which they are located one above the other and/or
-- it being possible for respectively stored products (24, 124) to be transferred back again, such that they can be attached by suction, to the conveying apparatus (16, 116) from the intermediate storage arrangement.

2. Intermediate store according to Claim 1,
- **characterized in that**
- the two production arrangements each contain a transporting means (12, 14, 112, 114) for the products (24, 124),
- the conveying apparatus (16, 116) is provided in functional terms between the two transporting means (12, 14, 112, 114).

3. Intermediate store according to one of the preceding claims,
- **characterized in that**
- the conveying apparatus has a vacuum belt (16, 116) on which the products (24, 124) can be retained such that they can be attached by suction.

4. Intermediate store according to one of the preceding claims,
- **characterized in that**
- the vacuum belt (16, 116) has two endlessly circulating transporting belts (26, 28, 126, 128) which are at a constant lateral spacing (30, 130) from one another,
- an ejecting device (80, 180) is provided transversely alongside the two transporting belts (26, 28, 126, 128), as seen in the transporting direction (22, 122), it being possible for in each case one product (24, 124) to be moved away downwards from the transporting belts (26, 28, 126, 128) by the ejecting device such that the retaining force which retains this product (24, 124) on the transporting belts (26, 28, 126, 128) with suction action loses its effect,
- a stoppage device (82, 182) is provided upstream of the ejecting device (80, 180) as seen in the transporting direction (22, 122), and can be moved out of the plane of the transporting belts (26, 28, 126, 128) in the downward direction to the extent where it is possible to interrupt onwards transportation of a product (24, 124) which is hanging with suction attachment on the transporting belts (26, 28, 126, 128).

5. Intermediate store according to Claim 4,
- **characterized in that**
- a suction device (132) is provided transversely alongside the two transporting belts (26, 28, 126, 128), as seen in the transporting direction.

6. Intermediate store according to Claim 4,
- **characterized in that**
- the stoppage device (82, 182) has pins (88, 89, 188, 189) which can be extended and retracted.

7. Intermediate store according to one of the preceding claims,
- **characterized in that**
- a plurality of intermediate storage arrangements (40, 42, 138, 140) are arranged one behind the other in the transporting direction (22, 122),
- products which are independent of one another can be stored in each intermediate storage arrangement and retrieved again from the same.

8. Intermediate store according to one of the preceding claims,
- **characterized in that**
- each intermediate storage arrangement (40, 42) contains magazines (44, 46) which can each be positioned individually beneath the conveying apparatus or the vacuum belt (16) such that it is possible to transfer products (24) from the vacuum belt into a magazine (44, 46) and to the vacuum belt from the magazine (44, 46),
- the products (24) can be stacked in the magazines (44, 46) in a state in which they are located one upon the other.

9. Intermediate store according to Claim 8,
- **characterized in that**
- an adjustment arrangement is provided for the heightwise adjustment, relative to the magazine, of the products stored in a magazine,
- the heightwise adjustment arrangement is provided for the products (24) of that magazine (44, 46) at which products (24) can be received from the vacuum belt (16) and from which products (24) can be transferred to the vacuum belt (16),
- the heightwise adjustment arrangement is provided such that a clear spacing (96, 97) between the conveying apparatus (16) and the respectively uppermost product (24) of a magazine which can filled and/or emptied does not exceed or drop below predetermined values.

10. Intermediate store according to one of Claims 1 to 7,
- **characterized in that**
- each intermediate storage arrangement contains a transfer arrangement (138) and a magazine arrangement (140) with at least one magazine (144),
- the transfer arrangement (138) is positioned in relation to the conveying apparatus or to the vacuum belt (116), and the at least one magazine is positioned in relation to the transfer arrangement, in each case such that it is possible to transfer products from the conveying apparatus or the vacuum belt to the transfer arrangement and from the latter to a magazine in each case and, vice versa, from a magazine to the transfer arrangement and from the latter back to the conveying apparatus.

11. Intermediate store according to Claim 10,
- **characterized in that**
- a transfer arrangement (138) has two conveying belts (213) which circulate endlessly about deflecting rollers (214, 216), have at least one rectilinear section and are provided beneath the conveying apparatus (116) as seen in the transporting direction (122),
- each conveying belt (213) has protruding bases (215) which project at right angles,
- a drive arrangement is provided for the synchronous circulatory movement of the two conveying belts (213) in both directions of circulation,
- a pusher arrangement (220, 222) is provided between the two mutually opposite conveying belts (213) of a transfer arrangement (138) such that products which are located between the facing rectilinear sections of these two conveying belts (213) and are resting on the protruding bases (215) thereof can be pushed, as a product group, out of the region of the transfer arrangement (138) into a magazine (144) and/or, vice versa, back again into the transfer arrangement (138).

12. Intermediate store according to Claim 11,
- **characterized in that**
- a pusher arrangement has two pushers (220, 222), of which, by means of the one pusher (220), products can be pushed out of a transfer arrangement (138) into a magazine (144) and, by means of the other pusher (222), products can be pushed out of a magazine (144) and back into the transfer arrangement (138) again.

13. Intermediate store according to one of Claims 10 to 12,
- **characterized in that**
- the conveying belts (213) of a transfer arrangement (138) can be activated such that the two respectively uppermost, facing protruding bases (215) located in their rectilinear sections are at a respectively predetermined spacing from the conveying arrangement, in particular from the transporting belts (126, 128) .

14. Intermediate store according to one of Claims 10 to 13,
- **characterized in that**
- the transfer arrangement (138) and magazine arrangement (140) are oriented such that the pushing direction with which products can be pushed out of a transfer arrangement (138) into a magazine arrangement (140) is oriented parallel or transversely to the transporting direction (122).

15. Intermediate store according to one of the preceding claims,
- **characterized in that**
- magazines (44, 144) can be adjusted individually or together along a displacement rail (50, 52, 150).

16. Intermediate store according to Claim 15,
- **characterized in that**
- each magazine (44, 46, 144) is fixed on a displacement carriage (56, 58, 156) or is designed as a displacement carriage,
- the displacement carriage (56, 58, 156) can be adjusted along a displacement rail (50, 52, 150).

17. Intermediate store according to one of the preceding claims,
- **characterized in that**
- a magazine (144) has bearing means (165, 166) which are arranged one above the other and are provided such that, on in each case two bearing means (165, 166) which are directed towards one another, it is possible to store a product such that it can be supported on its two border regions.

## Revendications

1. Réceptacle intermédiaire (10, 110) pour blisters (24, 124) porte-comprimés, étuis en matière plastique, boîtes et produits similaires, qui peut être activement interposé, dans la direction de transport (22, 122), entre un premier appareil de production et un appareil de production occupant une seconde position dans la direction de production,
- **caractérisé**
- **par** la présence, entre les deux appareils de production, d'un dispositif de convoyage (16, 116) en révolution sans fin ;
- par le fait qu'un générateur de dépression (35, 135) exerce, sur le dispositif de convoyage (16, 116), une action telle que les produits (24, 124) puissent être maintenus par aspiration sur ledit dispositif de convoyage (16, 116) ; et
- par la présence, au-dessous du dispositif de convoyage (16, 116), d'au moins un dispositif (40, 42, 138, 140) de stockage intermédiaire de produits (24, 124)
-- dans lequel des produits (24, 124), tombés ou expulsés du dispositif de convoyage (16, 116), peuvent être emmagasinés en superposition, et/ou
-- à partir duquel des produits (24, 124) respectivement emmagasinés peuvent être de nouveau transférés, par aspiration, audit dispositif de convoyage (16, 116).

2. Réceptacle intermédiaire selon la revendication 1,
- **caractérisé par le fait que**
- les deux appareils de production renferment respectivement un moyen d'acheminement (12, 14, 112, 114) destiné aux produits (24, 124),
- le dispositif de convoyage (16, 116) étant fonctionnellement interposé entre les deux moyens d'acheminement (12, 14, 112, 114).

3. Réceptacle intermédiaire selon l'une des revendications précédentes,
- **caractérisé par le fait que**
- le dispositif de convoyage possède un ruban (16, 116) à dépression, sur lequel les produits (24, 124) peuvent être retenus par aspiration.

4. Réceptacle intermédiaire selon l'une des revendications précédentes,
- **caractérisé**
- **par le fait que** le ruban (16, 116) à dépression possède deux bandes transporteuses (26, 28, 126, 128) à révolution sans fin, mutuellement distantes d'un espacement latéral constant (30, 130),
- par la présence, transversalement à côté des deux bandes transporteuses (26, 28, 126, 128) dans la direction de transport (22, 122), d'un dispositif d'éjection (80, 180) par l'intermédiaire duquel un produit (24, 124) peut être respectivement animé d'un mouvement vers le bas l'éloignant desdites bandes transporteuses (26, 28, 126, 128), de manière à neutraliser la force de retenue maintenant ce produit (24, 124), par aspiration, sur lesdites bandes transporteuses (26, 28, 126, 128) ; et
- par la présence, devant le dispositif d'éjection (80, 180) dans la direction de transport (22, 122), d'un dispositif d'arrêt (82, 182) pouvant accomplir, hors du plan des bandes transporteuses (26, 28, 126, 128), un mouvement descendant d'une distance propre à permettre l'interruption de la poursuite de l'acheminement d'un produit (24, 124) suspendu, par aspiration, auxdites bandes transporteuses (26, 28, 126, 128).

5. Réceptacle intermédiaire selon la revendication 4,
- **caractérisé**
- **par** la présence d'un dispositif d'aspiration (132) placé, dans la direction de transport, transversalement à côté des deux bandes transporteuses (26, 28, 126, 128).

6. Réceptacle intermédiaire selon la revendication 4,
- **caractérisé par le fait que**
- le dispositif d'arrêt (82, 182) possède des broches (88, 89, 188, 189) extractibles et insérables.

7. Réceptacle intermédiaire selon l'une des revendications précédentes,
- **caractérisé**
- **par** la présence de plusieurs dispositifs de stockage intermédiaire (40, 42, 138, 140), agencés en succession dans la direction de transport (22, 122) ; et
- par le fait que des produits peuvent, indépendamment les uns des autres, être respectivement emmagasinés dans chaque dispositif de stockage intermédiaire, ou de nouveau extraits de ce dernier.

8. Réceptacle intermédiaire selon l'une des revendications précédentes,
- **caractérisé par le fait que**
- chaque dispositif de stockage intermédiaire (40, 42) renferme des magasins (44, 46) pouvant être respectivement positionnés de manière individuelle, au-dessous du dispositif de convoyage ou au-dessous du ruban (16) à dépression, de façon telle que des produits (24) puissent être transférés dans un magasin (44, 46) en provenance du ruban à dépression, ou respectivement transférés audit ruban à dépression à partir dudit magasin (44, 46), sachant que
- lesdits produits (24) peuvent être empilés dans lesdits magasins (44, 46) en reposant les uns sur les autres.

9. Réceptacle intermédiaire selon la revendication 8,
- **caractérisé**
- **par** la présence d'un système de réglage en vue du réglage en hauteur, vis-à-vis d'un magasin, des produits stockés dans ledit magasin ;
- par le fait que ledit système de réglage en hauteur est prévu pour les produits (24) du magasin (44, 46) au niveau duquel des produits (24) peuvent être réceptionnés en provenance du ruban (16) à dépression, respectivement à partir duquel des produits (24) peuvent être transférés audit ruban (16) à dépression ; et
- par le fait que ledit système de réglage en hauteur est conçu de telle sorte qu'une distance intérieure (96, 97), entre le dispositif de convoyage (16) et le produit (24) occupant respectivement la position la plus haute, dans un magasin devant être respectivement empli ou vidé, n'excède pas positivement ou négativement des valeurs prédéterminées.

10. Réceptacle intermédiaire selon l'une des revendications 1 à 7,
- **caractérisé**
- **par le fait que** chaque dispositif de stockage intermédiaire renferme un dispositif de transfert (138) et un dispositif d'emmagasinage (140) comportant au moins un magasin (144) ; et
- **par le fait que** le positionnement respectif dudit dispositif de transfert (138) vis-à-vis du dispositif de convoyage ou vis-à-vis du ruban (116) à dépression, et du magasin prévu au minimum, vis-à-vis dudit dispositif de transfert, est conçu de façon telle que des produits puissent être respectivement transférés au dispositif de transfert à partir du dispositif de convoyage ou du ruban à dépression, et à un magasin respectif à partir dudit dispositif de transfert ; et puissent, inversement, être transférés d'un magasin au dispositif de transfert, puis de nouveau au dispositif de convoyage à partir dudit dispositif de transfert.

11. Réceptacle intermédiaire selon la revendication 10,
- **caractérisé**
- **par le fait qu'**un dispositif de transfert (138), situé au-dessous du dispositif de convoyage (116) dans la direction de transport (122), possède deux bandes convoyeuses (213) décrivant au moins une trajectoire rectiligne et tournant sans fin autour de rouleaux de renvoi (214, 216) ;
- **par le fait que** chaque bande convoyeuse (213) présente des fonds alvéolés (215) dépassant à angle droit ;
- par la présence d'un système d'entraînement imprimant le mouvement de révolution synchrone aux deux bandes convoyeuses (213), dans les deux sens de révolution ; et
- **par le fait qu'**un système de poussée (220, 222) est interposé entre les deux bandes convoyeuses (213) d'un dispositif de transfert (138), opposées l'une à l'autre, de façon telle que des produits situés entre les trajectoires rectilignes antagonistes de ces deux bandes convoyeuses (213), et reposant sur leurs fonds alvéolés (215), puissent être poussés dans un magasin (144) en tant que groupe de produits, hors de la région du dispositif de transfert (138) ; et/ou puissent, inversement, être réintroduits par coulissement dans ledit dispositif de transfert (138).

12. Réceptacle intermédiaire selon la revendication 11,
- **caractérisé par le fait**
- **qu'**un système de poussée possède deux coulisses (220, 222), l'une (220) desdites coulisses permettant de pousser, dans un magasin (144), des produits provenant d'un dispositif de transfert (138), et l'autre coulisse (222) permettant de réintroduire, dans ledit dispositif de transfert (138), des produits provenant d'un magasin (144).

13. Réceptacle intermédiaire selon l'une des revendications 10 à 12,
- **caractérisé par le fait que**
- les bandes convoyeuses (213) d'un dispositif de transfert (138) peuvent être activées de façon telle que, au sein des fonds alvéolés (215) situés sur leurs trajectoires rectilignes et tournés les uns vers les autres, les deux fonds occupant respectivement les positions les plus hautes présentent, respectivement, une distance préétablie vis-à-vis du dispositif de convoyage, en particulier vis-à-vis des bandes transporteuses (126, 128).

14. Réceptacle intermédiaire selon l'une des revendications 10 à 13,
- **caractérisé par le fait que**
- le dispositif de transfert (138) et le dispositif d'emmagasinage (140) sont orientés de telle sorte que la direction de coulissement, selon laquelle des produits peuvent être poussés dans un dispositif d'emmagasinage (140) à partir d'un dispositif de transfert (138), soit orientée parallèlement ou transversalement vis-à-vis de la direction de transport (122).

15. Réceptacle intermédiaire selon l'une des revendications précédentes,
- **caractérisé par le fait que**
- des magasins (44, 144) sont mobiles, individuellement ou conjointement, le long d'une glissière de déplacement (50, 52, 150).

16. Réceptacle intermédiaire selon la revendication 15,
- **caractérisé par le fait que**
- chaque magasin (44, 46, 144) est installé rigidement sur un chariot de déplacement (56, 58, 156), ou est réalisé sous la forme d'un chariot de déplacement, sachant que
- ledit chariot de déplacement(56, 58, 156) est mobile le long d'une glissière de déplacement (50, 52, 150).

17. Réceptacle intermédiaire selon l'une des revendications précédentes,
- **caractérisé par le fait**
- **qu'**un magasin (144) possède des supports superposés (165, 166) agencés de façon telle qu'un produit puisse être emmagasiné, en pouvant prendre appui dans ses deux zones marginales, sur deux supports respectifs (165, 166) dirigés l'un vers l'autre.
